# EUROPEAN PATENT APPLICATION

(11) **EP 2 940 579 A1**
(43) Date of publication of application: **04.11.2015**
(21) Application number: 15166237.6
(22) Date of filing: 04.05.2015
(51) Int. Cl.: G06F 9/45

(54) **ELECTRONIC DEVICE AND METHOD FOR CONVERTING SOURCE CODE INTO MACHINE CODE**

(30) Priority: 02.05.2014 KR 20140053403
(71) Applicant: Samsung Electronics Co., Ltd, Gyeonggi-do 443-742 (KR)
(72) Inventor: Kim, Bo-Gon, Gyeonggi-do (KR); Park, Jae-Min, Seoul (KR); Cho, Jung-Min, Seoul (KR); Choe, Seung-Yeon, Gyeonggi-do (KR)
(74) Representative: Nederlandsch Octrooibureau

(57) **Abstract**

An operation method of an electronic device is provided, which includes determining whether a target dependent area exists in a source code, and converting the target dependent area into a target independent Intermediate Representation (IR) when it is determined that the target dependent area exists in the source code.

## Description

### BACKGROUND

### 1. Field of the Invention

The present invention generally relates to an electronic device for converting a source code into a machine code and a method thereof.

### 2. Description of the Related Art

As the functions of electronic devices develop, the architecture of a Central Processing Unit (CPU) used in an electronic device also develops. For example, the architecture of the CPU used for the electronic device has variously changed from Advanced RISC Machines to X86, ARM 64, X86_64, or the like.

For a conventional electronic device, a method of converting a source code into an Intermediate Representation (IR) that is dependent upon a target, and converting the target dependent IR into a machine code, has been commonly used. This method is ready for use of the conversion to a machine code by generating a target dependent IR when an electronic device converts a source code into a machine code. However, when a corresponding target is changed, the target dependent IR may not be used for generating a machine code.

### SUMMARY

The present invention has been made to solve at least the above-mentioned problems and/or disadvantages and to provide at least the advantages described below.

Accordingly, an aspect of the present invention is to provide a method and apparatus for converting a source code into a machine code using a portable IR that is independent from a target, which may be applied to the machine codes of various targets.

Another aspect of the present invention is to provide a method and apparatus for including a portable IR that is independent from a target in a server in addition to an electronic device, so that the method and apparatus are widely applied to an electronic device that does not include a device for generating a portable IR and improve compatibility.

According to an aspect of the present invention, an operating method of an electronic device is provided. The operating method includes determining whether a target dependent area exists in a source code; and when it is determined that the target dependent area exists in the source code, converting the target dependent area into a target independent Intermediate Representation (IR).

According to another aspect of the present invention, an operating method of an electronic device is provided. The operating method includes converting a portable IR that is independent from a target into a target IR that is dependent upon the target; and converting the target IR obtained through the conversion into a machine code.

According to another aspect of the present invention, an electronic device is provided. The electronic device includes a portable determining unit configured to determine whether a target dependent area exists in a source code; and a non-targeted IR converter configured to convert the target dependent area into a target independent IR when it is determined that the target dependent area exists in the source code.

According to another aspect of the present invention, an electronic device is provided. The electronic device includes a second converter configured to convert a portable IR that is independent from a target into a target IR that is dependent upon the target; and a third converter configured to convert the target IR obtained through the conversion into a machine code.

### BRIEF DESCRIPTION OF THE DRAWINGS

The above and other aspects, features, and advantages of the present invention will be more apparent from the following detailed description, taken in conjunction with the accompanying drawings, in which:
FIG. 1 illustrates a network environment 100 including an electronic device 101 according to an embodiment of the present invention;
FIG. 2 is a block diagram illustrating hardware according to an embodiment of the present invention;
FIG. 3 is a block diagram of a portable IR converter of an electronic device according to an embodiment of the present invention;
FIG. 4 is a block diagram of a first converter according to an embodiment of the present invention;
FIG. 5 is a flowchart illustrating a process of converting a source code into a portable IR according to an embodiment of the present invention;
FIG. 6 is a flowchart illustrating a process of converting a portable IR into a target IR according to an embodiment of the present invention;
FIG. 7 is a diagram illustrating conversion of a source code into a target IR according to an embodiment of the present invention;
FIG. 8 is a diagram illustrating an example of converting a source code into a machine code using a portable IR according to an embodiment of the present invention;
FIG. 9 is a flowchart illustrating a method of an electronic device according to an embodiment of the present invention; and
FIG. 10 is a flowchart illustrating a method of an electronic device according to an embodiment of the present invention.

### DETAILED DESCRIPTION OF EMBODIMENTS OF THE PRESENT INVENTION

Hereinafter, the present invention will be described with reference to the accompanying drawings. The present invention may have various embodiments, and modifications and changes may be made therein. Therefore, the present invention will be described in conjunction with particular embodiments shown in the accompanying drawings. However, it should be understood that it is not intended to limit the present invention to the particular forms disclosed herein; rather, the present invention should be construed to cover all modifications, equivalents, and/or alternatives falling within the spirit and scope of the invention. In the description of the drawings, identical or similar reference numerals are used to designate identical or similar elements.

In the present disclosure, the expressions "include" or "may include" refer to the existence of a corresponding function, operation, or element, and does not limit one or more additional functions, operations, or elements. Also, as used herein, the terms "include" and/or "have" should be construed to denote a certain feature, number, step, operation, element, component or a combination thereof, and should not be construed to exclude the existence or possible addition of one or more other features, numbers, steps, operations, elements, components, or combinations thereof

The expressions "or" include any or all combinations of words enumerated together. For example, the expression "A or B" may include A, may include B, or may include both A and B.

In the present disclosure, expressions including ordinal numbers, such as "first" and "second," etc., may modify various elements. However, such elements are not limited by the above expressions. For example, the above expressions do not limit the sequence and/or importance of the corresponding elements. The above expressions may be used merely for the purpose of distinguishing one element from the other elements. For example, a first user device and a second user device indicate different user devices although both of them are user devices. For example, a first element may be referred to as a second element, and similarly, a second element may be referred to as a first element without departing from the scope of the present invention.

When an element is referred to as being "coupled" or "connected" to any other element, it should be understood that not only the element may be directly coupled or connected to the other element, but also a third element may be interposed there between. Contrarily, when an element is referred to as being "directly coupled" or "directly connected" to any other element, it should be understood that no element is interposed there between.

The terms used herein are used only to describe particular embodiments, and are not intended to limit the present invention. As used herein, singular forms are intended to include plural forms as well, unless the context clearly indicates otherwise.

Unless defined otherwise, all terms used herein, including technical and scientific terms, have the same meaning as those commonly understood by a person of ordinary skill in the art to which the present invention pertains. Such terms as those defined in a generally used dictionary are to be interpreted to have the same meanings as contextual meanings in the relevant field of art, and are not to be interpreted to have ideal or excessively formal meaning unless clearly defined in the present invention.

An electronic device according to the present invention may be a device including a communication function. For example, the electronic device may include at least one of a smartphone, a tablet Personal Computer (PC), a mobile phone, a video phone, an electronic book (e-book) reader, a desktop PC, a laptop PC, a netbook computer, a Personal Digital Assistant (PDA), a Portable Multimedia Player (PMP), an MP3 player, a mobile medical appliance, a camera, and a wearable device (e.g. a Head-Mounted-Device (HMD) such as electronic glasses, electronic clothes, an electronic bracelet, an electronic necklace, an electronic appcessory, electronic tattoos, or a smartwatch).

According to various embodiments of the present invention, the electronic device may be a smart home appliance having a communication function. The smart home appliances may include at least one of, for example, televisions, digital video disk (DVD) players, audio players, refrigerators, air conditioners, cleaners, ovens, microwaves, washing machines, air purifiers, set-top boxes, TV boxes (e.g., HomeSync^{™} of Samsung, Apple TV^{™}, or Google TV^{™} ), game consoles, electronic dictionaries, electronic keys, camcorders, or electronic frames.

According to various embodiments of the present invention, the electronic device may include at least one of various medical appliances (e.g., magnetic resonance angiography (MRA), magnetic resonance imaging (MRI), computed tomography (CT), and ultrasonic machines), navigation equipment, a global positioning system (GPS) receiver, an event data recorder (EDR), a flight data recorder (FDR), automotive infotainment device, electronic equipment for ships (e.g., ship navigation equipment and a gyrocompass), avionics, security equipment, a vehicle head unit, an industrial or home robot, an automatic teller machine (ATM) of a banking system, and a point of sales (POS) of a shop.

According to various embodiments of the present invention, the electronic device may include at least one of a part of furniture or a building/structure having a communication function, an electronic board, an electronic signature receiving device, a projector, and various kinds of measuring instruments (e.g., a water meter, an electric meter, a gas meter, a radio wave meter, and the like). The electronic device according to the present invention may be a combination of one or more of the aforementioned various devices. Also, the electronic device according to the present invention may be a flexible device. Further, it is obvious to those skilled in the art that the electronic device according to the present invention is not limited to the aforementioned devices.

Hereinafter, an electronic device according to the various embodiments of the present invention will be described with reference to the accompanying drawings. In various embodiments of the present invention, the term "user" may indicate a person using an electronic device or a device (e.g. an artificial intelligence electronic device) using an electronic device.

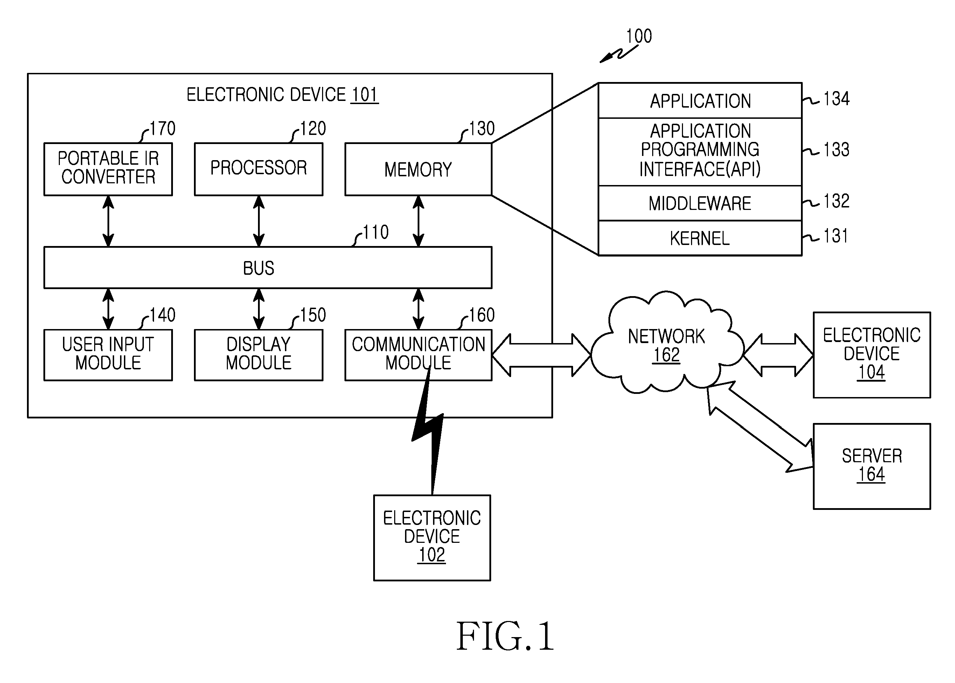

FIG. 1 illustrates a network environment 100 including an electronic device 101 according to an embodiment of the present invention. Referring to FIG. 1, the electronic device 101 may include a bus 110, a processor 120, a memory 130, a user input module 140, a display module 150, a communication module 160, and a portable IR converter 170.

The bus 110 is a circuit for connecting the aforementioned components and transmitting communication (for example, a control message) between the aforementioned components.

The processor 120 receives instructions from the aforementioned other elements (for example, the memory 130, the input/output interface 140, the display 150, the communication interface 160, the portable IR converter 170, or the like) through the bus 110, deciphers the received instructions, and performs calculations or data processing according to the deciphered instructions.

The memory 130 stores instructions or data received from or created by the processor 120 or other components (for example, the input/output interface 140, the display 150, the communication interface 160, the portable IR converter 170, or the like). The memory 130 may include programming modules, for example, a kernel 131, middleware 132, an Application Programming Interface (API) 133, applications 134, or the like. Each of the aforementioned programming modules may be formed of software, firmware, and hardware, or a combination of at least two thereof.

The kernel 131 controls or manages system resources (for example, the bus 110, the processor 120, the memory 130, or the like) used for executing an operation or a function implemented in the remaining other programming modules, for example, the middleware 132, the API 133, or the applications 134. In addition, the kernel 131 provides an interface through which the middleware 132, the API 133, or the applications 134 may control or manage the individual components of the electronic device 101 while accessing the individual components.

The middleware 132 serves as an intermediary enabling the API 133 or the applications 134 to transfer and receive data through communication with the kernel 131. Furthermore, in regard to task requests received from the applications 134, the middleware 132 performs a control (for example, scheduling or load balancing) for the task requests, using a method such as allocating at least one of the applications 134 a priority for using the system resources (for example, the bus 110, the processor 120, the memory 130, or the like) of the electronic device 101.

The API 133 is an interface through which the applications 134 may control functions provided by the kernel 131 and the middleware 132 and may include at least one interface or function (for example, instruction) for file control, window control, image processing, text control, or the like.

According to an embodiment of the present invention, the application 134 may include a Short Message Service (SMS)/Multimedia Messaging Service (MMS) application, an email application, a calendar application, an alarm application, a health care application (for example, application measuring a quantity of exercise or blood sugar) or an environment information application (for example, application providing information associated with pressure, humidity, temperature, or the like). Alternately, the applications 134 may include an application related to the information exchange between the electronic device 101 and an external electronic device 104. The application related to the exchange of information may include, for example, a notification relay application for transferring predetermined information to the external electronic device or a device management application for managing the external electronic device.

For example, the notification relay application may include a function of transferring, to the external electronic device 104, notification information generated from other applications of the electronic device 101 (for example, an SMS/MMS application, an e-mail application, a health management application, an environmental information application, and the like). Alternately, the notification relay application may receive notification information from, for example, the external electronic device 104 and provide the received notification information to a user. For example, the device management application may manage (for example, install, delete, or update) functions for at least a part of the external electronic device 104 communicating with the electronic device 101 (for example, turning on/off the external electronic device itself (or some components thereof) or adjusting brightness (or resolution) of a display), applications operating in the external electronic device, or services (for example, a telephone call service or a message service) provided from the external electronic device.

According to various embodiments of the present invention, the applications 134 may include applications, which are designated according to the property (for example, the type of electronic device) of the external electronic device 104. For example, when the external electronic device is an MP3 player, the applications 134 may include an application related to the reproduction of music. Similarly, when the external electronic device is a mobile medical device, the applications 134 may include an application related to the health care. According to an embodiment of the present invention, the applications 134 may include at least one of an application designated to the electronic device 101 and an application received from an external electronic device (for example, the server 164 or the electronic device 104).

The input/output interface 140 transfers instructions or data input from a user through an input/output device (for example, a sensor, a keyboard, or a touch screen) to, for example, the processor 120, the memory 130, the communication interface 160, or the portable IR converter 170 through the bus 110. For example, the input/output interface 140 may provide, to the processor 120, data associated with a user's touch input through the touch screen. Furthermore, through the input/output device (for example, a speaker or a display), the input/output interface 140 outputs instructions or data received from the processor 120, the memory 130, the communication interface 160, or the portable IR converter 170 through the bus 110. For example, the input/output interface 140 may output voice data, processed through the processor 120, to a user through a speaker.

The display 150 displays various pieces of information (for example, multimedia data or text data) to a user.

The communication interface 160 connects a communication between the electronic device 101 and the external electronic device (for example, the electronic device 104 or the server 164). For example, the communication interface 160 may be connected to a network 162 through wireless or wired communication to communicate with the external device. The wireless communication may include at least one of, for example, Wireless Fidelity (Wi-Fi), Bluetooth (BT), Near Field Communication (NFC), a Global Positioning System (GPS), and cellular communication (for example, Long Term Evolution (LTE), Long Term Evolution-Advanced (LTE-A), Code Division Multiple Access (CDMA), Wideband CDMA (WCDMA), Universal Mobile Telecommunication System (UMTS), Wireless Broadband (WiBro), or Global System for Mobile communication (GSM)). The wired communication may include at least one of, for example, a Universal Serial Bus (USB), a High Definition Multimedia Interface (HDMI), Recommended Standard 232 (RS-232), and a Plain Old Telephone Service (POTS).

According to an embodiment of the present invention, the network 162 may be a communication network. The communication network may include at least one of a computer network, the Internet, the Internet of things, and a telephone network. According to an embodiment of the present invention, a protocol (for example, a transport layer protocol, a data link layer protocol, or a physical layer protocol) for the communication between the electronic device 101 and the external device may be supported by at least one of the applications 134, the application programming interface 133, the middleware 132, the kernel 131, and the communication interface 160.

The portable IR converter 170 converts a source code to an IR that is independent from a target, converts the target independent IR into a target IR that is dependent upon the target, and converts the target dependent IR into a machine code.

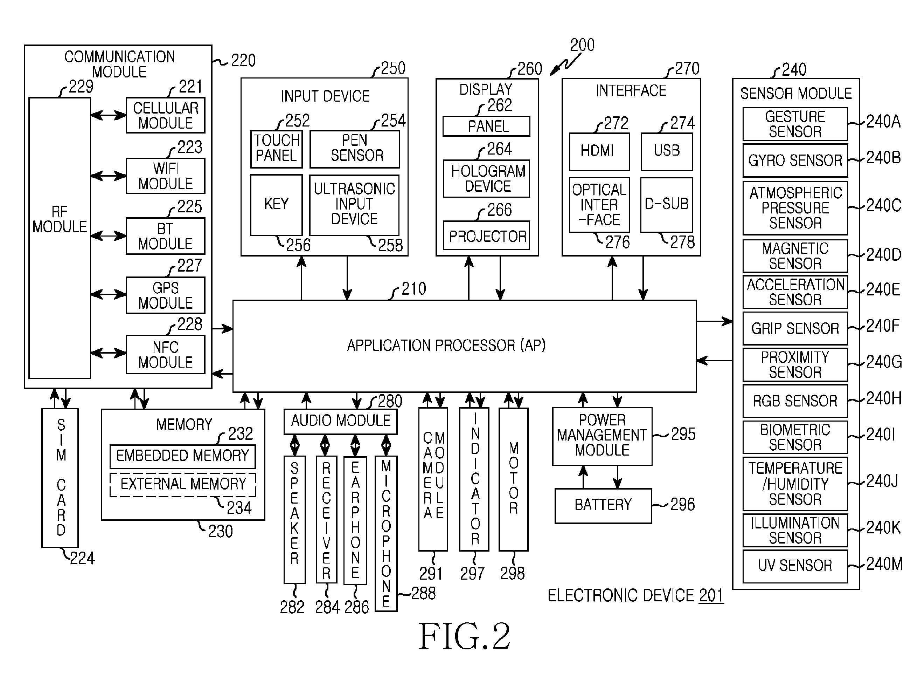

FIG. 2 is a block diagram illustrating hardware 200 including an electronic device 201 according to an embodiment of the present invention. The electronic device 201 may include, for example, a part or the entirety of the electronic device 101 illustrated in FIG. 1. The electronic device 201 may include one or more Application Processors (AP) 210, a communication module 220, a Subscriber Identification Module (SIM) card 224, a memory 230, a sensor module 240, an input device 250, a display 260, an interface 270, an audio module 280, a camera module 291, a power management module 295, a battery 296, an indicator 297, and a motor 298.

The AP 210 controls a plurality of hardware or software components connected to the AP 210 by driving an operating system or an application program, and performs processing of various pieces of data including multimedia data and calculations. The AP 210 may be embodied as, for example, a System on Chip (SoC). According to an embodiment of the present invention, the AP 210 may further include a Graphic Processing Unit (GPU).

The communication module 220 (for example, the communication interface 160) performs data transmission/reception in the communication between the electronic device 201 (for example, the electronic device 101) and other electronic devices (for example, the electronic device 104 and the server 106) connected over a network. According to an embodiment of the present invention, the communication module 220 may include a cellular module 221, a Wi-Fi module 223, a BT module 225, a GPS module 227, an NFC module 228, and a Radio Frequency (RF) module 229.

The cellular module 221 provides a voice call, a video call, a Short Message Service (SMS), or an Internet service through a communication network (for example, LTE, LTE-A, CDMA, WCDMA, UMTS, WiBro, GSM, or the like). Furthermore, the cellular module 221 distinguishes and authenticates electronic devices within a communication network using, for example, the SIM card 224. According to an embodiment of the present invention, the cellular module 221 may perform at least some functions that the AP 210 may provide. For example, the cellular module 221 may perform at least some of the multimedia control functions.

According to an embodiment of the present invention, the cellular module 221 may include a communication processor (CP). Furthermore, the cellular module 221 may be embodied as, for example, an SoC. Although the components such as the memory 230, the power management module 295, or the like are illustrated as separate components from the AP 210, according to an embodiment of the present invention, the AP 210 may be embodied to include at least a part of the described components.

According to an embodiment of the present invention, the AP 210 or the cellular module 221 (for example, a communication processor) loads instructions or data received from at least one of a non-volatile memory and other components connected thereto into a volatile memory and processes the same. Furthermore, the AP 210 or the cellular module 221 stores data received from or generated by at least one of other components in a non-volatile memory.

Each of the Wi-Fi module 223, the BT module 225, the GPS module 227, and the NFC module 228 may include, for example, a processor for processing data transmitted/received through the corresponding module. Although the cellular module 221, the WiFi module 223, the BT module 225, the GPS module 227, and the NFC module 228 are illustrated as separate blocks in FIG. 2, at least some (for example, two or more) of the cellular module 221, the WiFi module 223, the BT module 225, the GPS module 227, and the NFC module 228 may be included in one integrated chip (IC) or IC package according to an embodiment of the present invention. For example, at least some (for example, a communication processor corresponding to the cellular module 221 and a WiFi processor corresponding to the WiFi module 223) of the processors corresponding to the cellular module 221, the WiFi module 223, the BT module 225, the GPS module 227, and the NFC module 228 may be embodied as one SoC.

The RF module 229 transmits/receives data, for example, an RF signal. Although not illustrated, the RF module 229 may include, for example, a transceiver, a Power Amp Module (PAM), a frequency filter, a Low Noise Amplifier (LNA) or the like. Further, the RF module 229 may further include a component for transmitting/receiving electronic waves over a free air space in wireless communication, for example, a conductor, a conducting wire or the like. Although it is illustrated that the cellular module 221, the WiFi module 223, the BT module 225, the GPS module 227, and the NFC module 228 share a single RF module 229, at least one of the cellular module 221, the WiFi module 223, the BT module 225, the GPS module 227, and the NFC module 228 may perform RF signal transmission/reception through a separate RF module.

The SIM card 224 may be inserted into a slot formed in a particular portion of the electronic device. The SIM card 224 may include unique identification information (for example, an Integrated Circuit Card IDentifier (ICCID)) or subscriber information (for example, an International Mobile Subscriber IDentity (IMSI)).

The memory 230 (for example, the memory 130) may include an embedded memory 232 or an external memory 234. The embedded memory 232 may include, for example, at least one of a volatile memory (for example, a Dynamic RAM (DRAM), a Static RAM (SRAM), and a Synchronous Dynamic RAM (SDRAM)), and a non-volatile Memory (for example, a One Time Programmable ROM (OTPROM), a Programmable ROM (PROM), an Erasable and Programmable ROM (EPROM), an Electrically Erasable and Programmable ROM (EEPROM), a mask ROM, a flash ROM, a NAND flash memory, and an NOR flash memory).

According to an embodiment of the present invention, the embedded memory 232 may be a Solid State Drive (SSD). The external memory 234 may further include a flash drive, for example, a Compact Flash (CF), a Secure Digital (SD), a Micro Secure Digital (Micro-SD), a Mini Secure Digital (Mini-SD), an extreme Digital (xD), a memory stick, or the like. The external memory 234 may be functionally connected with the electronic device 201 through various interfaces. According to an embodiment of the present invention, the electronic device 201 may further include a storage device (or storage medium) such as a hard drive.

The sensor module 240 measures a physical quantity or detects an operation state of the electronic device 201, and converts the measured or detected information to an electrical signal. The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (for example, Red, Green, and Bblue (RGB) sensor), a biometric sensor 240I, a temperature/humidity sensor 240J, an illumination sensor 240K, and a Ultra Violet (UV) sensor 240M. Alternatively, the sensor module 240 may include, for example, an E-nose sensor, an electromyography (EMG) sensor, an electroencephalogram (EEG) sensor, an electrocardiogram (ECG) sensor, an Infrared sensor, an iris sensor, a fingerprint sensor, and the like. The sensor module 240 may further include a control circuit for controlling one or more sensors included in the sensor module 240.

The input device 250 may include a touch panel 252, a (digital) pen sensor 254, a key 256, or an ultrasonic input device 258. The touch panel 252 recognizes a touch input through at least one of, for example, a capacitive type, a resistive type, an infrared type, and an ultrasonic type. The touch panel 252 may further include a control circuit. In the case of the capacitive type touch panel, physical contact or proximity recognition is possible. The touch panel 252 may further include a tactile layer. In this case, the touch panel 252 may provide a tactile reaction to the user.

The (digital) pen sensor 254 may be implemented, for example, using the same or similar method to the method of receiving a user's touch input or using a separate recognition sheet. The key 256 may include, for example, a physical button, an optical key, or a keypad. The ultrasonic input device 258 identifies data by detecting a sonic wave through a microphone (for example, microphone 288) in the electronic device 201 from an input tool generating an ultrasonic signal, and is capable of wireless recognition. According to an embodiment of the present invention, the electronic device 201 may also receive a user input from an external device (for example, a computer or a server) connected thereto using the communication module 220.

The display 260 (for example, the display 150) may include a panel 262, a hologram device 264, or a projector 266. The panel 262 may be, for example, a Liquid Crystal Display (LCD), an Active Matrix Organic Light Emitting Diode (AM-OLED), or the like. The panel 262 may be embodied to be, for example, flexible, transparent, or wearable. The panel 262 may be formed as one module together with the touch panel 252. The hologram device 264 shows a stereoscopic image in the air using interference of light. The projector 266 projects light onto a screen to display an image. The screen may be located, for example, inside or outside the electronic device 201. According to an embodiment of the present invention, the display 260 may further include a control circuit for controlling the panel 262, the hologram device 264, or the projector 266.

The interface 270 may include, for example, a High-Definition Multimedia Interface (HDMI) 272, a Universal Serial Bus (USB) 274, an optical interface 276, or a D-subminiature (D-sub) 278. The interface 270 may be included in, for example, the communication interface 160 illustrated in FIG. 1. Alternatively, the interface 270 may include, for example, a Mobile High-definition Link (MHL) interface, a Secure Digital (SD) card/Multi-Media Card (MMC) interface, or an Infrared Data Association (IrDA) standard interface.

The audio module 280 bilaterally converts a sound and an electronic signal. At least some components of the audio module 280 may be included in, for example, the input/output interface 140 illustrated in FIG. 1. The audio module 280 processes sound information input or output through, for example, the speaker 282, the receiver 284, the earphones 286, the microphone 288 or the like.

The camera module 291 is a device for capturing a still image or a video, and according to an embodiment of the present invention, may include one or more image sensors (for example, a front sensor or a rear sensor), a lens, an Image Signal Processor (ISP), or a flash (for example, a Light Emitting Diode (LED) or xenon lamp).

The power management module 295 manages power of the electronic device 201. Although not illustrated, the power management module 295 may include, for example, a Power Management Integrated Circuit (PMIC), a charger Integrated Circuit (IC), or a battery gauge.

The PMIC may be mounted to, for example, an integrated circuit or an SoC semiconductor. Charging methods may be classified into a wired charging method and a wireless charging method. The charger IC charges a battery and prevents over voltage or over current from a charger. According to an embodiment of the present invention, the charger IC may include a charger IC for at least one of the wired charging and the wireless charging. Examples of the wireless charging method may include a magnetic resonance type, a magnetic induction type, or an electromagnetic wave type, and an additional circuit for wireless charging, such as a coil loop circuit, a resonance circuit, or a rectifier circuit may be added.

The battery gauge measures, for example, a remaining quantity of the battery 296, or a voltage, a current, or a temperature during the charging. The battery 296 stores or generates electricity, and supplies power to the electronic device 201 using the stored or generated electricity. The battery 296 may include, for example, a rechargeable battery or a solar battery.

The indicator 297 displays a specific status of the electronic device 201 or the part (for example the AP 210) of electronic device 201, for example, a booting status, a message status, a charging status, and the like. The motor 298 converts an electrical signal to mechanical vibration. Although not illustrated, the electronic device 201 may include a processing unit (for example, a GPU) for supporting a mobile TV. The processing unit for supporting the mobile TV may process media data according to a standard of Digital Multimedia Broadcasting (DMB), Digital Video Broadcasting (DVB), media flow or the like.

Each of the components of the electronic device according to the present invention may be implemented by one or more components and the name of the corresponding component may vary depending on the type of the electronic device. The electronic device according to the present invention may be configured by including at least one of the above-described elements, and some of the elements may be omitted, or other elements may be added. Further, some of the elements of the electronic device according to the present invention may be combined to be one entity, which can perform the same functions as those of the components before the combination.

The names of the above described components of hardware according to the present invention may vary depending on the type of electronic device. The hardware according to the present invention may be configured to include at least one of the described component elements, a few of the component elements may be omitted, or an additional component element may be further included. Also, a few of the component elements of the hardware according to the present invention may be coupled to form a single entity, and may equivalently execute functions that corresponding component elements have executed before being coupled.

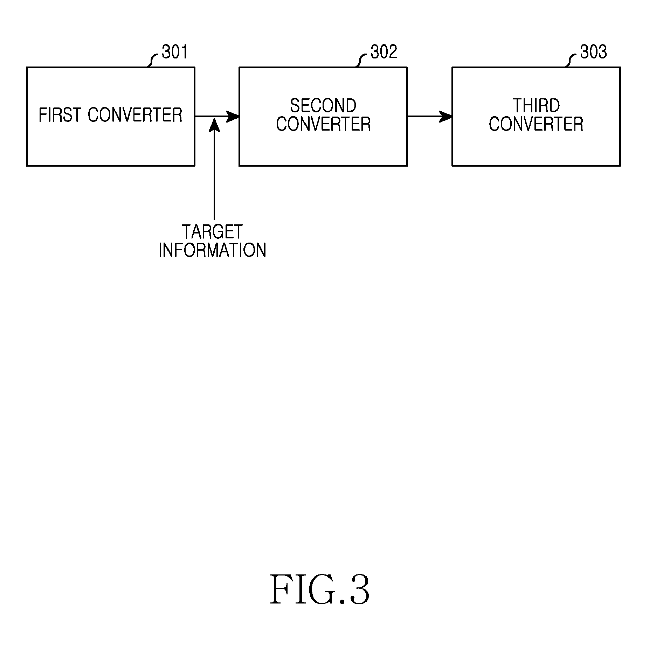

FIG. 3 is a block diagram of a portable IR converter of an electronic device according to an embodiment of the present invention. According to an embodiment of the present invention, the electronic device or the portable IR converter included in the electronic device may include a first converter 301, a second converter 302, and a third converter 303.

According to an embodiment of the present invention, as a first step for the electronic device to convert a source code into a machine code, the first converter 301 converts a source code into an Intermediate Representation (IR).

According to an embodiment of the present invention, the first converter 301 determines whether an area that is independent from a target (hereinafter, referred to as a "target independent area") or an area that is dependent upon the target (hereinafter, referred to as a "target dependent area") exists in a source code. According to an embodiment of the present invention, when the first converter 301 determines that the target dependent area exists in the source code, the first converter 301 converts the target dependent area of the source code into an IR that is independent from the target. Hereinafter, an IR that is converted from a target dependent area of a source code to be independent from the target is referred to as a "non-targeted IR", and an IR that is converted from a non-targeted IR to be dependent upon the target is referred to as a "targeted IR".

According to an embodiment of the present invention, when the first converter 301 determines that the target independent area exists in the source code, the first converter 301 converts the target independent area of the source code into an IR.

According to an embodiment of the present invention, the first converter 301 generates a portable IR by combining at least one IR (non-targeted IR) which is independent from a target and is converted from a target dependent area of the source code and at least one IR converted from a target independent area of the source code.

According to an embodiment of the present invention, the second converter 302 may convert a portable IR generated in the first converter 301 into a target IR. According to an embodiment of the present invention, the second converter 302 determines whether a non-targeted IR which is independent from a target exists in the portable IR output from the first converter 301. According to an embodiment of the present invention, when the second converter 302 determines that the non-targeted IR exists in the portable IR, the second converter 302 converts the non-targeted IR of the portable IR into a target IR which is dependent upon a target. According to an embodiment of the present invention, the second converter 302 may convert the non-targeted IR of the portable IR into a target IR, using target information.

The target information may be information of a target Central Processing Unit (CPU) architecture, a C++ Application Binary Interface (ABI), a data layout, a primitive data type definition, or the like.

According to an embodiment of the present invention, the third converter 303 may convert a target IR obtained through conversion in the second converter 302 into a machine code.

According to an embodiment of the present invention, an electronic device may include at least one of the first converter 301, the second converter 302, and the third converter 303. For example, the electronic device may include only the first converter 301, or may include only the first converter 301 and the second converter 302.

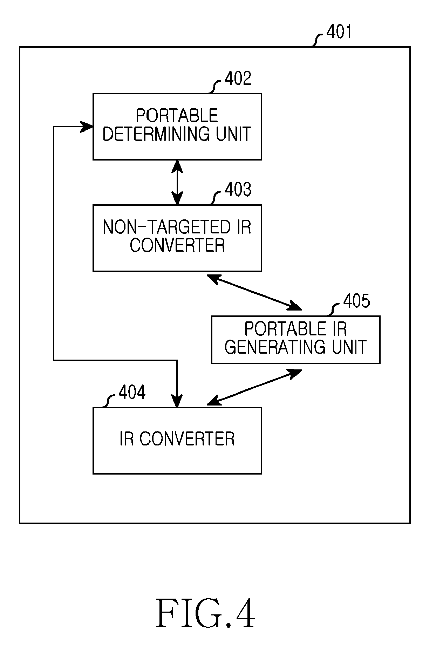

FIG. 4 is a block diagram of a first converter according to an embodiment of the present invention. According to an embodiment of the present invention, the first converter 401 may include a portable determining unit 402, a non-targeted IR converter 403, an IR converter 404, and a portable IR generator (generating unit) 405.

According to an embodiment of the present invention, the portable determining unit 402 determines whether a source code is independent from a target. According to various embodiments of the present invention, when the portable determining unit 402 determines that a target dependent area exists in a source code, the non-targeted IR converter 403 converts the target dependent area of the source code into an IR (non-targeted IR) that is independent from the target.

According to an embodiment of the present invention, when the portable determining unit 402 determines that a target independent area exists in the source code, the IR converter 404 converts the target independent area of the source code into an IR. For example, the IR obtained through conversion executed in the IR converter 404 may be a portable IR.

According to an embodiment of the present invention, the portable IR generating unit 405 may generate a portable IR by combining an IR (non-targeted IR) that is independent from a target and is generated from the non-targeted IR converter 403 and an IR generated from the IR converter 404.

According to an embodiment of the present invention, an electronic device may include a portable determining unit that determines whether a target dependent area exists in a source code, and a non-targeted IR converter that converts the target dependent area into a target independent IR (non-targeted IR) when it is determined that the target dependent area exists in the source code.

When it is determined that a target independent area exists in the source code, the electronic device may further include an IR converter that converts the target independent area of the source code into an IR.

The electronic device may further include a portable IR generating unit that combines at least one IR, and generates a portable IR using the combined IR.

According to an embodiment of the present invention, an electronic device may include a second converter that converts a portable IR which is independent from a target into a target IR that is dependent upon the target, and a third converter that converts the target IR into a machine code.

The operations of the second converter include determining whether a non-targeted IR exists in the portable IR, and converting the non-targeted IR of the portable IR into the target IR when it is determined that the non-targeted IR exists in the portable IR.

The operations of the second converter may include using target information.

The portable IR may include a target independent IR (e.g., non-targeted IR) or a target dependent IR.

The target IR may include a target dependent IR.

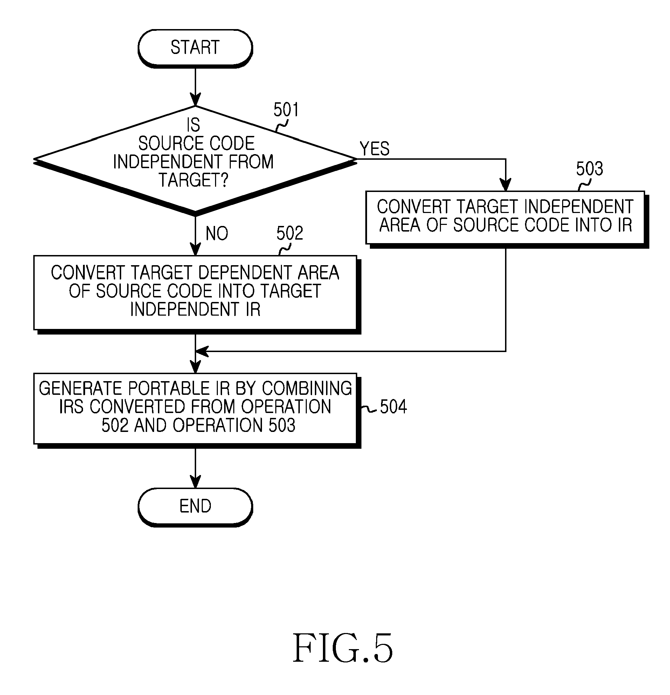

FIG. 5 is a flowchart illustrating a process of converting a source code into a portable IR according to an embodiment of the present invention. Referring to FIG. 5, an electronic device determines whether a source code is independent from a target in step 501. According to an embodiment of the present invention, the electronic device may determine whether a target independent area exists in the source code. According to an embodiment of the present invention, the electronic device may distinguish a target independent area and a target dependent area in the source code.

According to an embodiment of the present invention, when the electronic device determines that at least a part of the source code is dependent upon a target, the electronic device converts the target dependent area of the source code into an IR (non-targeted IR) that is independent from the target, in step 502. According to an embodiment of the present invention, when the electronic device determines that at least a part of the source code is independent from a target, the electronic device converts the target independent area of the source code into an IR, in step 503. The IR may be a portable IR.

According to an embodiment of the present invention, the electronic device generates a portable IR by combining IRs obtained through conversion executed in steps 502 and 503 into a single IR, in step 504. According to an embodiment of the present invention, when a non-targeted IR is not generated in step 502 and only an IR is generated in step 503, step 504 is not executed and the IR generated in step 503 is used as a portable IR.

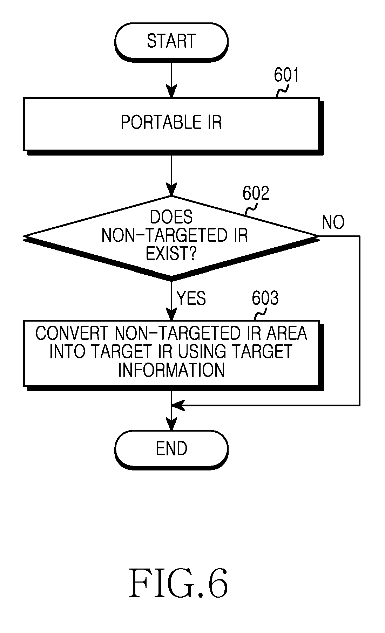

FIG. 6 is a flowchart illustrating a process of converting a portable IR into a target IR according to an embodiment of the present invention. Referring to FIG. 6, an electronic device determines that a source code is converted into a portable IR that is independent from a target, in step 601.

According to an embodiment of the present invention, the electronic device determines whether a non-targeted IR area exists in the portable IR in step 602. According to an embodiment of the present invention, the non-targeted IR area may be an area of the portable IR corresponding to a target independent area that is converted from a target dependent area of the source code.

According to an embodiment of the present invention, when the electronic device determines that the non-targeted IR area exists in the portable IR, the electronic device converts the non-targeted IR area that is independent from the target to a target IR that is dependent upon the target, using target information, in step 603.

When the electronic device determines that the non-targeted IR area does not exist in the portable IR in step 602, the electronic device terminates the process.

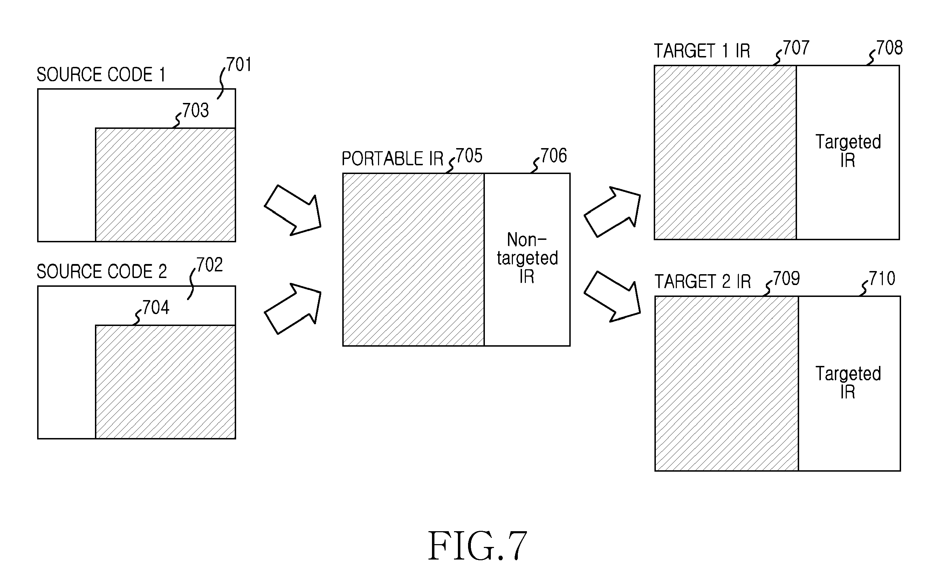

FIG. 7 is a diagram illustrating conversion of a source code into a target IR according to an embodiment of the present invention.

According to an embodiment of the present invention, an electronic device determines whether a target independent area 703 exists in a source code 1 including areas 701 and 703, and whether a target independent area 704 exists in a source code 2 including areas 702 and 704. According to an embodiment of the present invention, when the target independent area 703 exists in the source code 1 including areas 701 and 703 and when the target independent area 704 exists in the source code 2 including areas 702 and 704, the electronic device converts the target independent area 703 of the source code 1 and the target independent area 704 of the source code 2 into an IR. According to an embodiment of the present invention, the electronic device may convert the target dependent area 701 of the source code 1 into an IR that is independent from a target, or may convert the target dependent area 702 of the source code 2 into an IR that is independent from a target. According to an embodiment of the present invention, the electronic device generates a portable IR including areas 705 and 706 by combining an IR that is converted from the target independent area 703 of the source code 1 and from the target independent area 704 of the source code 2, and a target independent IR (non-targeted IR) converted from the target dependent area 701 of the source code 1 and from the target dependent area 702 of the source code 2.

According to an embodiment of the present invention, portable IR includes the IR area 705 corresponding to the IR that is converted from the target independent area 703 of the source code 1 and the target independent area 704 of the source code 2, and the target independent area 706 corresponding to the target independent IR (non-targeted IR) that is converted from the target dependent area 703 of the source code 1 and the target dependent area 704 of the source code 2.

According to an embodiment of the present invention, the electronic device converts the portable IR including areas 705 and 706 into a target 1 IR including areas 707 and 708 and a target 2 IR including areas 709 and 710. Here, the target 1 IR and the target 2 IR are dependent upon a target. Further, when the portable IR is converted into the target 1 IR and the target 2 IR, target information may be used. According to an embodiment of the present invention, the target 1 IR includes a target independent area 707 and a target dependent area 708, and the target IR includes a target independent area 709 and a target dependent area 710.

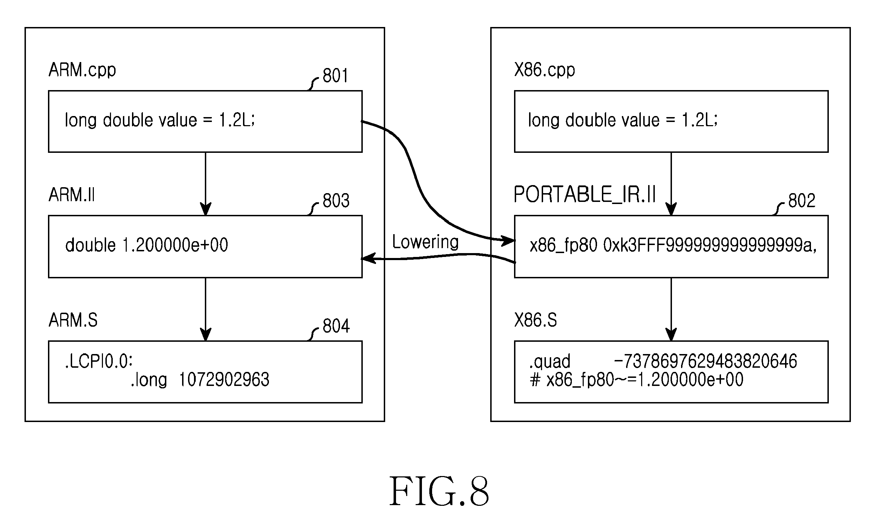

FIG. 8 is a diagram illustrating an example of converting a source code into a machine code using a portable IR according to an embodiment of the present invention. Hereinafter, an example of converting Advanced RISC Machine (ARM) architecture into a portable IR provided in the form of x86 architecture will be described.

Referring to FIG. 8, the electronic device determines that a target dependent code named "long double" is included in a source code 801 provided in the form of ARM architecture. According to an embodiment of the present invention, the electronic device may convert the source code provided in the form of ARM architecture which is dependent upon a target into a target independent IR 802 provided in the form of x86, so as to generate a target independent IR code. According to an embodiment of the present invention, the electronic device may convert the source code 801 in the form of the ARM architecture into the portable IR 802 in the form of x86 that uses a parameter type such as "x86_fp80" and a 80 bit format such as "0xk3fff999999999999999A".

According to an embodiment of the present invention, the electronic device may convert the portable IR 802 in the form of x86 into a target IR 803 in the form of ARM architecture. According to an embodiment of the present invention, the electronic device may determine that a target dependent code named "double", in the form of ARM architecture 801, is included in the portable IR 802. According to an embodiment of the present invention, the electronic device of the ARM architecture may use target information when converting the portable IR 802 into the target dependent IR 803 provided in the form of ARM architecture.

According to an embodiment of the present invention, the electronic device of ARM architecture may convert the target dependent IR 803 provided in the form of ARM architecture into a machine code 804 provided in the form of ARM architecture. According to an embodiment of the present invention, the form of the architecture of a target independent IR (non-targeted IR) included in the portable IR may be X86, ARM, or a third new form.

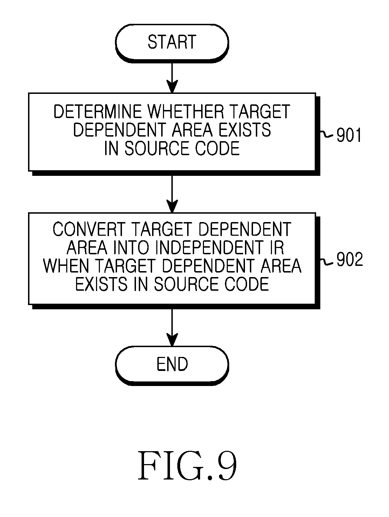

FIG. 9 is a flowchart illustrating a method of an electronic device according to an embodiment of the present invention. According to an embodiment of the present invention, the electronic device determines whether a target dependent area exists in a source code, in step 901. According to an embodiment of the present invention, the electronic device determines whether a target dependent area exists in the source code that may be formed of a target dependent area and a target independent area.

According to an embodiment of the present invention, when it is determined that the target dependent area exists in the source code, the electronic device converts the target dependent area into a target independent IR (non-targeted IR), in step 902.

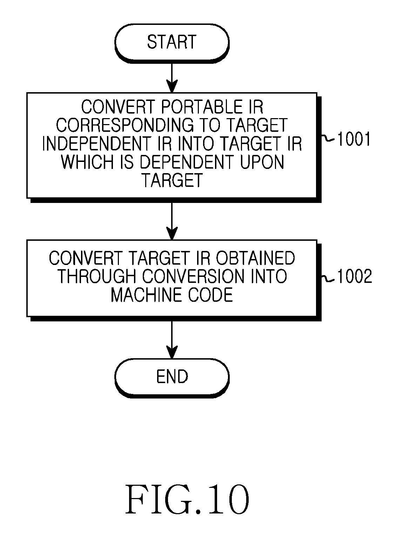

FIG. 10 is a flowchart illustrating a method of an electronic device according to an embodiment of the present invention. According to an embodiment of the present invention, the electronic device converts a portable IR corresponding to a target independent IR into a target IR that is dependent upon a target, in step 1001. According to an embodiment of the present invention, the electronic device determines whether a target independent IR (non-targeted IR) exists in the portable IR. According to an embodiment of the present invention, when the electronic device determines that the target independent IR (non-targeted IR) exists in the portable IR, the electronic device may convert, into a target IR that is dependent upon a target, the area (non-targeted IR) corresponding to the target independent area converted from the target dependent area of the portable IR. According to an embodiment of the present invention, the electronic device may use target information when converting, into the target IR dependent upon a target, the area (non-targeted IR) corresponding to the target independent area converted from the target dependent area of the portable IR.

According to an embodiment of the present invention, the electronic device converts the target IR into a machine code, in step 1002.

According to an embodiment of the present invention, the operation method of the electronic device may include determining whether a target dependent area exists in a source code, and converting the target dependent area into a target independent IR when it is determined that the target dependent area exists in the source code.

When it is determined that a target independent area exists in the source code, the operation method of the electronic device may further include converting the target independent area of the source code into an IR.

The operation method of the electronic device may further include combining at least one IR, and generating a portable IR using the combined IR.

According to an embodiment of the present invention, the operation method of the electronic device may include converting a portable IR which is independent from a target into a target IR that is dependent upon the target, and converting the target IR into a machine code.

Determining whether to execute conversion to the target IR may include determining whether a non-targeted IR exists in the portable IR, and converting the non-targeted IR of the portable IR into the target IR when it is determined that the non-targeted IR exists in the portable IR.

Converting the non-targeted IR into the target IR may include using target information.

The portable IR may include a target independent IR or a target dependent IR.

Various embodiments disclosed in the specification and drawings are merely presented to easily describe the technical contents of the present invention and help the understanding of the present invention and are not intended to limit the scope of the present invention. Therefore, all changes or modifications derived from the technical idea of the present invention as well as the embodiments described herein should be interpreted to belong to the scope of the present invention as defined by the appended claims and their equivalents.

## Claims

1. An operating method of an electronic device, the operating method comprising:
determining whether a target dependent area exists in a source code; and
when it is determined that the target dependent area exists in the source code, converting the target dependent area into a target independent Intermediate Representation (IR).

2. The operating method of claim 1, further comprising:
when it is determined that a target independent area exists in the source code, converting the target independent area in the source code into an IR.

3. The operating method of claim 2, further comprising:
combining at least one IR obtained through the conversion; and
generating a portable IR using the combined at least one IR.

4. The operating method of claim 1, further comprising:
converting a portable IR that is independent from a target into a target IR that is dependent upon the target; and
converting the target IR into a machine code.

5. The operating method of claim 4, further comprising determining whether to execute the conversion to the target IR, wherein determining whether to execute the conversion to the target IR comprises:
determining whether a non-targeted IR area exists in the portable IR; and
when it is determined that the non-targeted IR area exists in the portable IR, converting the non-targeted IR area of the portable IR into the target IR.

6. The operating method of claim 5, wherein converting the non-targeted IR area into the target IR comprises converting the non-targeted IR area into the target IR using target information.

7. The operating method of claim 4, wherein the portable IR includes a target independent IR or a target dependent IR.

8. An electronic device comprising:
a portable determining unit configured to determine whether a target dependent area exists in a source code; and
a non-targeted Intermediate Representation (IR) converter configured to convert the target dependent area into a target independent IR when it is determined that the target dependent area exists in the source code.

9. The electronic device of claim 8, further comprising:
an IR converter configured to convert a target independent area of the source code into an IR when it is determined that the target independent area exists in the source code.

10. The electronic device of claim 9, further comprising:
a portable IR generating unit configured to combine at least one IR obtained through the conversion and to generate a portable IR using the combined at least one IR.

11. The electronic device of claim 9, further comprising:
a second converter configured to convert a portable IR that is independent from a target into a target IR that is dependent upon the target; and
a third converter configured to convert the target IR into a machine code.

12. The electronic device of claim 11, wherein the second converter is further configured to determine whether a non-targeted IR area exists in the portable IR, and converts the non-targeted IR area of the portable IR into the target IR when it is determined that the non-targeted IR area exists in the portable IR.

13. The electronic device of claim 11, wherein the second converter is further configured to use target information.

14. The electronic device of claim 11, wherein the portable IR includes a target independent IR or a target dependent IR.

15. The electronic device of claim 14, wherein the target IR is a target dependent IR.
